# EUROPÄISCHE PATENTANMELDUNG

(11) **EP 3 376 736 A1**
(43) Veröffentlichungstag der Anmeldung: **19.09.2018**
(21) Anmeldenummer: 17161115.5
(22) Anmeldetag: 15.03.2017
(51) Int. Cl.: H04L 29/08

(54) **VERFAHREN UND VORRICHTUNG ZUR ÜBERMITTLUNG VON DATEN IN EINEM COMPUTERNETZWERK SOWIE COMPUTERPROGRAMM MIT EINER IMPLEMENTATION DES VERFAHRENS**

(71) Anmelder: Siemens Aktiengesellschaft, 80333 München (DE)
(72) Erfinder: Heindl, Elisabeth, 90556 Cadolzburg (DE); Kohler, Benjamin, 90419 Nürnberg (DE)

(57) **Zusammenfassung**

Die Erfindung ist ein Verfahren und eine nach dem Verfahren arbeitende Vorrichtung sowie ein Computerprogramm mit einer Implementation des Verfahrens zur Übermittlung von Daten in einem die Cloud (20) umfassenden Computernetzwerk (10) zwischen einem oder mehreren in einem Publish-Subscribe-Verfahren als Publisher (12) fungierenden Geräten und einer Datenbasis (34) in der Cloud (20) mit einem datentechnisch zwischen dem Publisher (12) oder mehreren Publishern (12) und der Cloud (20) befindlichen Gateway (24), wobei das Gateway (24) einen Subscriber (14) umfasst, welcher von einem Publisher (12) nach dem Publish-Subscribe-Verfahren versandte Daten empfängt, wobei das Gateway (24) einen Interpreter (26) umfasst, welcher die vom Subscriber (14) empfangenen Daten automatisch aggregiert und/oder reduziert und wobei das Gateway (24) die nach der Verarbeitung mittels des Interpreters (26) resultierenden Daten an die Datenbasis (34) in der Cloud (20) übermittelt oder für eine Übernahme in die Datenbasis (34) zur Verfügung stellt.

## Beschreibung

Die Erfindung betrifft ein Verfahren zur Übermittlung von Daten in einem die Cloud umfassenden Computernetzwerk. Im Weiteren betrifft die Erfindung auch eine Vorrichtung zur Ausführung des Verfahrens sowie ein Computerprogramm mit einer Implementation des Verfahrens.

Eine Kommunikation zwischen den Kommunikationsteilnehmern in einem Computernetzwerk kann nach unterschiedlichen Grundprinzipien erfolgen. Bekannt sind ein Request/Response-Verfahren sowie ein Publish-Subscribe-Verfahren. Solche Verfahren werden mitunter auch als Pattern bezeichnet, also Request/Response-Pattern bzw. Publish-Subscribe-Pattern.

Bei einer Kommunikation nach dem Request/Response-Verfahren sind Sender und Empfänger einer Nachricht miteinander verbunden und die im Rahmen der Übermittlung der jeweiligen Nachricht ablaufende Datenübertragung erfolgt zwischen dem Sender (Data Provider) und dem Empfänger (Data Consumer). Beim Publish-Subscribe-Verfahren sendet der Publisher (Data Provider; Server) seine Nachricht und die darin enthaltenen Daten ins Netzwerk und an eine festgelegte Teilnehmergruppe. Der oder die Subscriber (Data Consumer; Client) können die Nachricht aus dem Netzwerk abgreifen, ohne eine dedizierte Verbindung zum Publisher aufzubauen. - Entsprechend der üblichen Terminologie werden hier und im Folgenden Geräte, die in einem Netzwerk Daten nach dem Publish-Subscribe-Verfahren zur Verfügung stellen, als Publisher und entsprechend Geräte, die in einem Netzwerk Daten nach dem Publish-Subscribe-Verfahren empfangen oder zumindest empfangen können, als Subscriber bezeichnet.

Speziell bei den Publishern kann es sich um IoT-Geräte (Internet of Things) handeln, also zum Beispiel Sensoren im Feld eines automatisierten technischen Prozesses oder dergleichen. Eine Verarbeitung der von solchen Publishern versandten Nachrichten erfolgt absehbar immer mehr in der sogenannten Cloud.

Außerdem bringt das Publish-Subscribe-Verfahren zwei grundsätzliche Probleme mit sich:
Ein erster Nachteil besteht darin, dass über das Netzwerk viele Nachrichten gesendet werden, die vom Subscriber nicht verwendet werden. Nachdem im Feld aber häufig weitaus mehr Daten entstehen, als verschickt werden können, kommt es zwangsläufig nach gewisser Zeit zu Datenkonsistenz-Problemen, bis hin zu einem unkontrollierten Datenverlust. Kommt es zu einem unkontrollierten Datenverlust, sind unter Umständen ganze sogenannte Zeitreihen wertlos. Eine spätere Analyse der Daten mit sogenannten Big Data Algorithmen ist jedoch nur möglich, wenn sichergestellt ist, dass Zeitreihen eine ausreichende Datenkonsistenz aufweisen.

In heutigen IoT-Szenarien übernehmen als IoT-Gateway fungierende sogenannte Edge Gateways den Datentransfer aus der Feldebene in die Cloud. Ein IoT-Gateway, dessen Aufgabe darin besteht, Daten aus dem Feld von vielen Datenquellen, nämlich zum Beispiel von Servern, einzusammeln, muss diese Daten aufbereiten, bevor diese weitergeschickt werden können. Über geeignete Filtermechanismen oder über sogenannte Stream-Processing-Regeln müssen Daten reduziert (Reduktion der Datenmenge) und oder aggregiert (Kombinieren von Daten über der Zeit oder Kombinieren von mehreren Nachrichten über der Zeit zu einer Nachricht) werden.

Um auch "kleine Geräte" wie zum Beispiel Sensoren oder dergleichen zu unterstützen, ist bei dem OPC UA (Open Platform Communication - Unified Architecture) Publish-Subscribe-Verfahren vorgesehen, dass solche Geräte als Publisher ihre Daten in einem minimalistischen Format und damit eingeschränkten Metainformationen versenden können.

Ein zweiter Nachteil besteht beim OPC UA Publish-Subscribe-Verfahren darin, dass kein Browsing-Mechanismus zur Verfügung steht.

Eine Aufgabe der vorliegenden Erfindung besteht ausgehend von dem vorstehend Skizzierten darin, ein Verfahren zur Übertragung und Verarbeitung von Daten in einem Computernetzwerk nach dem Publish-Subscribe-Verfahren anzugeben, welches die genannten Nachteile vermeidet oder zumindest deren Auswirkungen reduziert.

Diese Aufgabe wird erfindungsgemäß mittels eines Verfahrens zur Übermittlung von Daten in einem Computernetzwerk, nämlich einem die sogenannte Cloud umfassenden Computernetzwerk, mit den Merkmalen des Anspruchs 1 gelöst. Dazu ist bei einem Verfahren zur Übermittlung von Daten in einem solchen Computernetzwerk zwischen einem oder mehreren in einem Publish-Subscribe-Verfahren als Publisher fungierenden Geräten einerseits und einer Datenbasis in der Cloud andererseits Folgendes vorgesehen: Zwischen dem Publisher oder mehreren Publishern und der Cloud, nämlich datentechnisch zwischen dem oder den Publishern und der Cloud, befindet sich eine im Folgenden als Gateway bezeichnete Funktionseinheit. Bei dem Gateway kann es sich um ein eigenständiges Gerät, aber auch um eine reine Softwarefunktionalität handeln. Das Gateway umfasst einen Subscriber, also eine Funktionseinheit oder Softwarefunktionalität, welche von einem Publisher nach dem Publish-Subscribe-Verfahren versandte Nachrichten und die darin enthaltenen Daten empfängt, also in einem Publish-Subscribe-Verfahren zur Datenübermittlung als Subscriber fungiert. Das Gateway umfasst des Weiteren einen Interpreter, welcher die in einer vom Subscriber empfangenen Nachricht enthaltenen Daten automatisch aggregiert und/oder reduziert, also eine automatische Vorverarbeitung einer nach dem Publish-Subscribe-Verfahren empfangenen Nachricht durchführt.

Die nach der Verarbeitung mittels des Interpreters resultierenden Daten übermittelt das Gateway (aktiv) an die Datenbasis in der Cloud oder stellt diese (passiv) für eine Übernahme in die Datenbasis zur Verfügung.

Die oben genannte Aufgabe wird auch mittels einer Vorrichtung, insbesondere einer im dem gegenständlichen Verfahren als Gateway fungierenden Vorrichtung, gelöst, welche nach dem Verfahren wie hier und im Folgenden beschrieben arbeitet und dazu Mittel zur Durchführung des Verfahrens umfasst. Das gegenständliche Verfahren ist zur automatischen Ausführung in Form eines Computerprogramms realisiert. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch eine Vorrichtung, in deren Speicher als Mittel zur Durchführung des Verfahrens und seiner Ausgestaltungen ein solches Computerprogramm geladen oder ladbar ist.

Das Computerprogramm ist zur Ausführung durch einen Computer bestimmt, der in an sich bekannter Art und Weise eine Verarbeitungseinheit in Form von oder nach Art eines Mikroprozessors sowie einen Speicher umfasst, in den das Computerprogramm geladen ist. Wenn im Folgenden Verfahrensschritte oder Verfahrensschrittfolgen beschrieben werden, bezieht sich dies auf Aktionen, die aufgrund des Computerprogramms oder unter Kontrolle des Computerprogramms erfolgen, sofern nicht ausdrücklich darauf hingewiesen ist, dass einzelne Aktionen durch einen Bediener veranlasst werden. Zumindest bedeutet jede Verwendung des Begriffs "automatisch", dass die betreffende Aktion aufgrund des Computerprogramms oder unter Kontrolle des Computerprogramms erfolgt.

Anstelle eines Computerprogramms mit einzelnen Programmcodeanweisungen kann die Implementierung des hier und im Folgenden beschriebenen Verfahrens auch in Form von Firmware erfolgen. Dem Fachmann ist klar, dass anstelle einer Implementation eines Verfahrens in Software stets auch eine Implementation in Firmware oder in Firm- und Software möglich ist. Daher soll für die hier vorgelegte Beschreibung gelten, dass von den Begriffen Software und Computerprogramm auch andere Implementationsmöglichkeiten, nämlich insbesondere eine Implementation in Firmware oder in Firm- und Software, umfasst sind.

Des Weiteren gilt für die nachfolgende Beschreibung zur Vermeidung unnötiger Wiederholungen, dass Merkmale und Details, die im Zusammenhang mit dem gegenständlichen Verfahren sowie eventuellen Ausgestaltungen beschrieben sind, selbstverständlich auch im Zusammenhang mit und im Hinblick auf eine zur Durchführung des Verfahrens eingerichtete Vorrichtung, insbesondere ein zur Durchführung des Verfahrens eingerichtetes Gateway, und umgekehrt gelten. Demnach kann das Verfahren auch mittels einzelner oder mehrerer Verfahrensmerkmale fortgebildet sein, die sich auf von der Vorrichtung ausgeführte Verfahrensschritte beziehen, und die Vorrichtung, insbesondere das Gateway, kann entsprechend auch durch Mittel zur Ausführung von im Rahmen des Verfahrens ausgeführten Verfahrensschritten fortgebildet sein. Entsprechend gelten Merkmale und Details, die im Zusammenhang mit dem gegenständlichen Verfahren und eventuellen Ausgestaltungen beschrieben sind, selbstverständlich auch im Zusammenhang mit und im Hinblick auf die zur Durchführung des Verfahrens bestimmte Vorrichtung und jeweils umgekehrt, so dass bezüglich der Offenbarung zu den einzelnen Aspekten der Erfindung stets wechselseitig Bezug genommen wird bzw. werden kann.

Der Vorteil der Erfindung besteht darin, dass mittels des Gateways Daten aus der Feldebene in eine Cloud-Infrastruktur, insbesondere eine dortige Datenbasis, übertragbar sind. Mittels des beschriebenen Verfahrens können Daten von Geräten, die nach dem Publish-Subscribe-Verfahren kommunizieren, insbesondere Geräte, die mit OPC UA Pub/Sub kommunizieren, herstellerunabhängig und effizient zur Auswertung in die Cloud übertragen werden. Außerdem unterstützt das Verfahren die Darstellung der Daten mittels eines Cloud-Portals und eine solche Darstellung unterstützt wiederum Benutzer der Cloud bei der Konfiguration ihres Datenzugangs. Das vorgeschlagene Verfahren gleicht die Nachteile des OPC UA Pub/Sub Patterns aus, welches von vielen Geräten unterstützt wird und in einem IoT-Szenario aus Sicherheitsgründen oftmals erforderlich ist. Das Gateway kann mit Daten von einem OPC UA Publisher ähnlich verfahren wie mit Daten von einem OPC UA Server. Außerdem kann die Datenmenge so weit reduziert werden, dass es nicht zu einem unkontrollierten Datenverlust kommt, welcher die in der Cloud gespeicherten Zeitreihen wertlos machen würde.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform des gegenständlichen Verfahrens / der gegenständlichen Vorrichtung nicht vorhanden ist. Jedenfalls ist jede Bezugnahme in der Beschreibung auf Aspekte abhängiger Ansprüche auch ohne speziellen Hinweis ausdrücklich als Beschreibung optionaler Merkmale zu lesen.

Bei einer Ausführungsform des Verfahrens umfasst das Gateway einen mittels eines Cloud-Diensts parametrierbaren Filter zum Filtern der nach der Verarbeitung mittels des Interpreters resultierenden Daten. Der Filter ermöglicht eine weitere Reduktion der Datenmenge und/oder eine gezielte Auswahl einzelner Daten, zum Beispiel zum Anzeigen der der jeweiligen Auswahl (Filterkriterien) entsprechenden Daten.

Bei einer weiteren Ausführungsform des Verfahrens umfasst das Gateway einen Datenstromgenerator zum Erzeugen eines Datenstroms aus den nach der Verarbeitung mittels des Interpreters und ggf. des Filters resultierenden Daten. In Form des resultierenden Datenstroms können die Daten besonders leicht und effizient in die Cloud übertragen werden.

Bei einer nochmals weiteren Ausführungsform des Verfahrens verarbeitet der Interpreter die vom Subscriber empfangenen Daten automatisch nach vorgegebenen oder vorgebbaren Regeln und aggregiert und/oder reduziert die Datenmenge entsprechend der jeweiligen Regel oder der jeweiligen Regeln.

Der Vorteil der Erfindung und ihrer Ausgestaltungen besteht damit insbesondere darin, dass Daten in von einem Publisher ausgesandten Nachrichten, insbesondere eine OPC UA Publish/Subscribe Datamessage, auch dann, wenn diese in der rudimentärsten Form versandt werden, so interpretiert werden, dass ein Filtern und optional ein Stream Processing möglich ist. Dies vermeidet die bisherige Situation, wonach ein Subscriber die Daten in einer von einem Publisher versandten Nachricht in dem Format empfangen muss, in dem sie versandt wurden. Bei dem hier vorgestellten Ansatz ist der Subscriber, nämlich der Subscriber des Gateways, nicht der eigentliche Empfänger der mittels einer ausgesandten Nachricht übermittelten Daten, sondern fungiert eher als Zwischenempfänger oder Relaisstation und bereitet mittels des Interpreters die Daten für den eigentlichen Empfänger, insbesondere die Datenbasis in der Cloud, und/oder für eine Anzeige mittels eines Cloud-Portals auf.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- FIG 1: Kommunikationsteilnehmer an einem Computernetzwerk, von denen in einem Publish-Subscribe-Verfahren einige als Publisher und andere als Subscriber für in dem Computernetzwerk übermittelte Daten fungieren,
- FIG 2: ein Gateway mit einem Subscriber, welches mittels des Subscribers von einem Publisher oder einer Vielzahl von Publishern in das Computernetzwerk übermittelte Daten empfangen kann und dafür bestimmt ist, diese aufzubereiten und in aufbereiteter Form weiterzuleiten,
- FIG 3: ein Beispiel für eine Struktur einer von einem Publisher über das Computernetzwerk übermittelten Nachricht und
- FIG 4: eine graphische Veranschaulichung einer bei der Aufbereitung der empfangenen Daten durch das Gateway angewandten Regel.

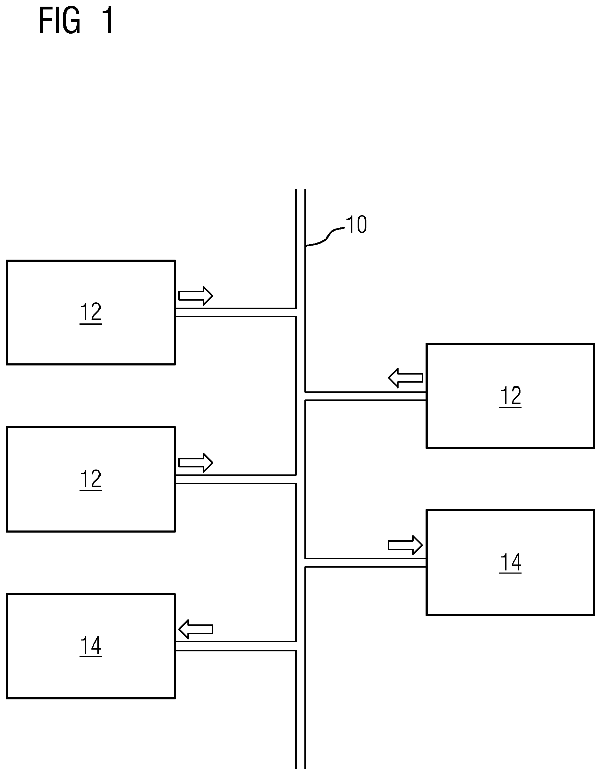

Die Darstellung in FIG 1 zeigt schematisch vereinfacht eine Datenübertragung in einem gegebenenfalls auch verteilten Computernetzwerk 10 zwischen einzelnen unmittelbar oder mittelbar an das Computernetzwerk 10 angeschlossenen Kommunikationsteilnehmern nach dem Publish-Subscribe-Verfahren. Einzelne Kommunikationsteilnehmer senden dabei Nachrichten (mit darin enthaltenen Daten) in das Computernetzwerk 10 und fungieren entsprechend als Publisher 12. Andere Kommunikationsteilnehmer empfangen die von einem oder mehreren Publishern 12 in das Computernetzwerk 10 gesandten Nachrichten und fungieren entsprechend als Subscriber 14. Beim Publish-Subscribe-Verfahren besteht keine direkte Verbindung zwischen einem Versender einer Nachricht (Publisher 12) und einem Empfänger einer Nachricht (Subscriber 14). Stattdessen sind die Nachrichten vom jeweiligen Publisher 12 in einer Art und Weise ausgezeichnet, die es dem Subscriber 14 ermöglicht, eine für ihn relevante Nachricht zu identifizieren und die darin enthaltenen Daten zu empfangen.

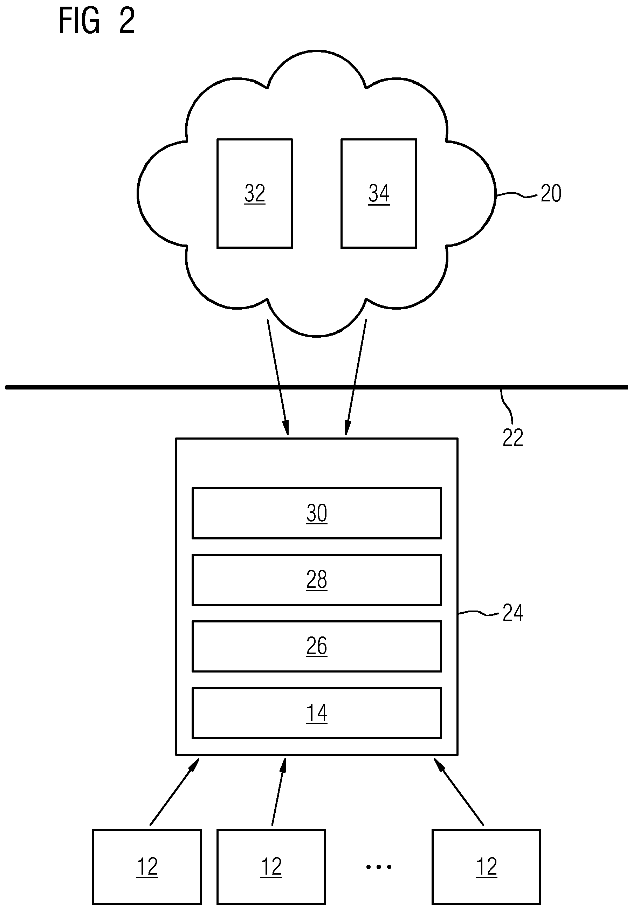

Dem hier vorgeschlagenen Ansatz liegt zugrunde, dass die von einem oder mehreren Publishern 12, insbesondere IoT-Geräten im Feld eines automatisierten technischen Prozesses, erzeugten Daten in der sogenannten Cloud 20 (FIG 2) verarbeitet werden sollen. Die Cloud 20 und die kommunikative Verbindung zur Cloud 20 erweitern das Computernetzwerk 10, so dass die Übermittlung der Daten in einem die Cloud 20 umfassenden Computernetzwerk erfolgt. Aufgrund von Firewall-Regeln ist allerdings ein direkter Empfang der von einem Publisher 12 versandten Daten in der Cloud 20 nicht möglich.

Die Darstellung in FIG 2 zeigt eine Mehrzahl von Publishern 12, die Cloud 20 sowie eine Firewall 22 zwischen der Cloud 20 einerseits und der Feldebene mit den Publishern 12 andererseits. Eine im Folgenden als IoT-Gateway oder kurz als Gateway 24 bezeichnete Funktionseinheit, die einen Subscriber 14 umfasst und daher von einem oder mehreren Publishern 12 versandte Daten empfangen kann, fungiert als Schnittstelle zwischen der Feldebene einerseits und der Cloud 20 andererseits. Das Gateway 24 ist zwischen die Feldebene und die Cloud 20 geschaltet und implementiert ein Verfahren zur Interpretation der von einem Publisher 12 gesandten Nachricht und der darin enthaltenen Daten.

Das Gateway 24 umfasst zur Interpretation solcher Daten einen Interpreter 26. Weiter umfasst das Gateway 24 einen Filter 28 zum Filtern der mittels des Interpreters 26 verarbeiteten Daten. Schließlich umfasst das Gateway 24 in der in FIG 2 schematisch vereinfacht dargestellten Ausführungsform auch noch einen Datenstromgenerator 30, welcher die mittels des Interpreters 26 verarbeiteten und gegebenenfalls mittels des Filters 28 gefilterten Daten weiterverarbeitet und für ein externes (in der Cloud 20) sogenanntes Stream Processing vorbereitet.

In der Cloud 20 wird zumindest ein Dienst 32 ausgeführt, der zum Konfigurieren des Gateways 24 und/oder zum Anzeigen der vom Gateway 24 empfangenen Daten und/oder zum Anzeigen der vom Gateway 24 mittels des Interpreters 26, Filters 28 und/oder Datenstromgenerators 30 verarbeiteten Daten bestimmt ist. Des Weiteren wird in der Cloud 20 zumindest eine Datenbasis 34 vorgehalten, welche Zeitreihen der vom Gateway 24 erhältlichen, vorverarbeiteten Daten speichert.

Für eine solche Vorverarbeitung ist es essentiell wichtig, ein einzelnes Datum (eine einzelne Variable) innerhalb einer von einem Publisher 12 versandten Nachricht, insbesondere einer OPC UA Data Message, eindeutig zu identifizieren.

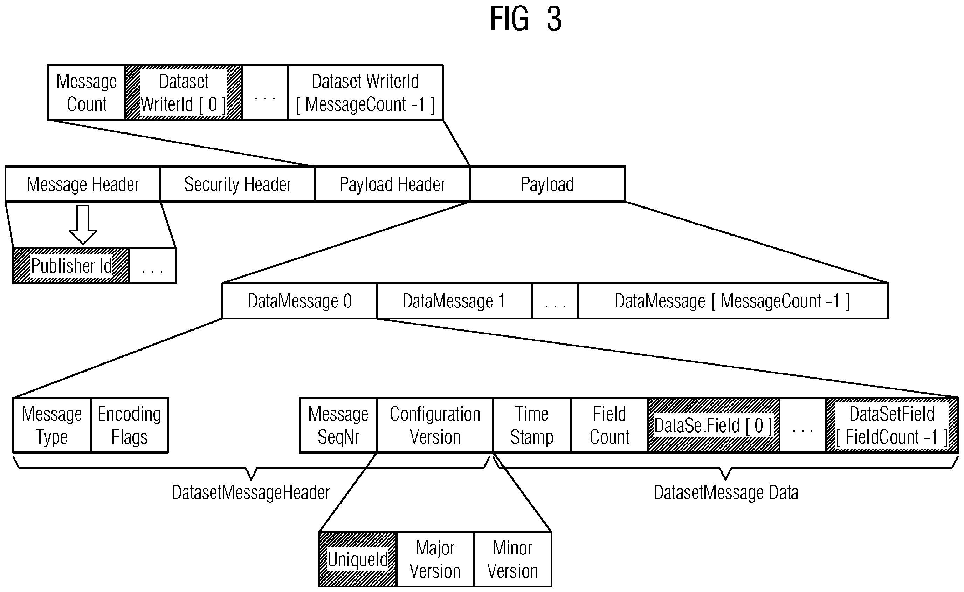

Die Darstellung in FIG 3 zeigt die für das hier vorgeschlagene Verfahren wesentlichen Bestandteile einer OPC UA Publisher/Subscriber Message.

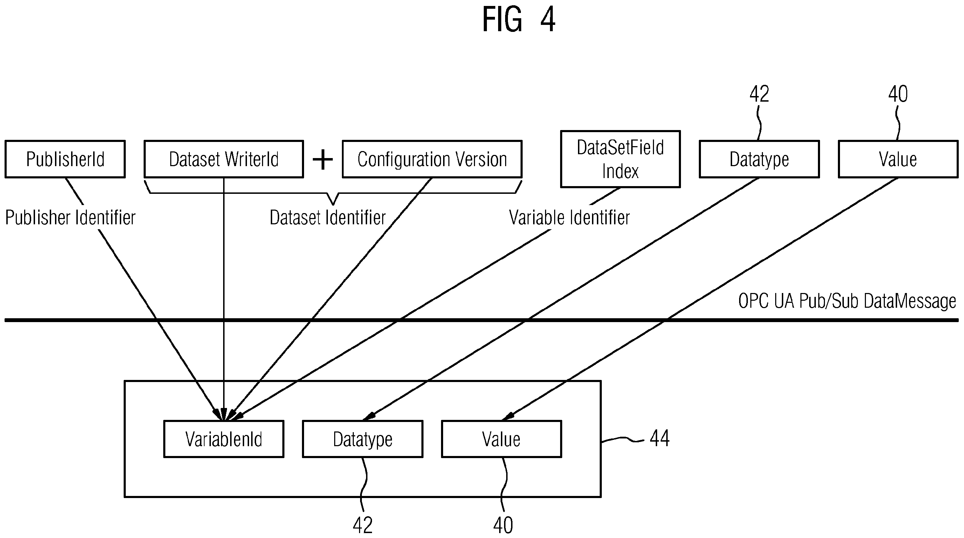

Das Verfahren verknüpft die Variable PublisherId, welche den Publisher 12 (OPC UA Publisher) authentifiziert, mit der Variablen DatasetWriterId und der Variablen ConfigurationVersion, wie dies in der Darstellung in FIG 4 gezeigt ist. Die genannten Variablen sind in der Darstellung in FIG 3 jeweils durch eine Schraffur markiert, um diese im Vergleich zu den weiteren von der Nachricht umfassten Variablen hervorzuheben.

Die Variable ConfigurationVersion besteht aus einem eindeutigen Identifier, der UniqueId, einer MajorVersion, die hochgezählt wird, wenn sich die Reihenfolge der Datenfelder ändert oder Datenfelder gelöscht werden, und einer MinorVersion, die hochgezählt wird, wenn neue Felder hinzukommen.

Neben der genannten Verknüpfung werden nach dem Verfahren aus einer OPC UA Publisher/Subscriber Message an einer vorgegebenen oder vorgebbaren Indexposition der Inhalt der Variablen des Variablenfelds DataSetField (FIG 3: zweite Reihe von unten; rechts) als Wert 40 (FIG 4: Value) und als Datentyp 42 (FIG 4: Datatype) übernommen (DataSetField[Index].Wert = Wert; DataSetField[Index].Datentyp = Datentyp); Index = [0..FieldCount-1]).

Wenn das DataSetField als "OPC UA Variant" kodiert ist, sind darin sowohl der Wert Value 40 des übertragenen Datums wie auch dessen Datentyp Datatype 42 enthalten. Wird komprimiertes Encoding verwendet, werden nur die Werte in der Dataset Message übertragen und der Datentyp muss aus der zugehörigen Metadata Message ermittelt werden. Der Index des DataSetField ersetzt den Namen der Variablen, wenn keine Metadataset Message zur Verfügung steht.

In der Darstellung in FIG 4 sind oberhalb der horizontalen Trennlinie die genannten Variablen der OPC UA Publisher/Subscriber Message und unterhalb der Trennlinie die aufgrund der Zusammenfassung gemäß dem hier vorgeschlagenen Ansatz resultierenden Daten gezeigt.

Die Darstellung in FIG 4 ist eine graphische Veranschaulichung der beim hier erläuterten Beispiel vom Interpreter 26 bei der Verarbeitung, insbesondere der Vorverarbeitung, der empfangenen Daten angewandten Regel. Das Ergebnis der Verknüpfung einzelner Variablen der empfangenen Daten ist das Ergebnis der Anwendung der die Funktion des Interpreters 26 bestimmenden, vorgegebenen oder alternativ auch vorgebbaren Regel.

In der Darstellung in FIG 4 ist außerdem veranschaulicht, dass sich ein Datensatz 44 für eine Zeitreihe in der Datenbasis 34 in der Cloud 20 in Form einer Zusammenfassung einer Variablenkennung ("VariablenId"), eines Datentyps Datatype 42 und eines Werts Value 40 ergibt. In die VariablenId fließen dabei aus der zugrundeliegenden OPC UA Publisher/Subscriber Message die PublisherId, die DataSetWriterId, die ConfigurationVersion sowie der Index des DataSetField ein. Dies kann zum Beispiel erfolgen, indem jede der genannten Variablen mittels einer vorgegebenen oder vorgebbaren Maske in grundsätzlich an sich bekannter Art und Weise maskiert wird und die Ergebnisse der Maskierung in ebenfalls grundsätzlich an sich bekannter Art und Weise an vorgegebenen oder vorgebbaren Positionen die Bits der VariablenId bilden. Weiter gehören zu dem Datensatz ein Wert Value 40 und ein Datentyp Datatype 42, der aus dem DataSetField an der jeweiligen Indexposition übernommen wurde.

Anhand der VariablenId ist eine zeitlich korrekte Einordnung der Daten (Value 40 und Datatype 42) in eine in der Datenbasis 34 angelegte Zeitreihe möglich. Anhand der VariablenId kann der Datensatz bei mehreren in der Datenbasis 34 angelegten Zeitreihen auch automatisch jeweils genau einer Zeitreihe zugeordnet werden, nämlich zum Beispiel anhand der der VariablenId zugrundeliegenden PublisherId einer für die Daten genau eines Publishers 12 angelegten Zeitreihe.

Die vorstehend und im Folgenden beschriebenen Funktionen werden durch das Gateway 24, insbesondere ein die Funktion des Gateways 24 bestimmendes und als Gatewaysoftware fungierendes Computerprogramm, ausgeführt. Bei einer Realisierung des Gateways 24 in Form einer Gatewaysoftware sind das Gateway 24 und die Gatewaysoftware identisch, so dass die Begriffe Gateway 24 und Gatewaysoftware 24 synonym sind und hier auch synonym verwendet werden. Die Gatewaysoftware 24 umfasst ebenfalls in Software implementierte Funktionseinheiten, welche als Subscriber 14, Interpreter 26, Filter 28 fungieren, sowie ggf. eine in Software implementierte Funktionseinheit, welche als Datenstromgenerator 30 fungiert.

Mittels des Interpreters 26 erfolgt die oben beschriebene Generierung eines Datensatzes 44 oder einzelner Datensätze 44 auf Basis einer OPC UA Publisher/Subscriber Message.

Die Daten werden dabei automatisch aggregiert und/oder reduziert. Zum Reduzieren der Daten können einfache Regeln zur Anwendung kommen, zum Beispiel eine Regel, die dazu führt, dass Daten, welche sich nicht geändert haben, und/oder Daten, welche durch einen OPC UA Statuscode "Bad" disqualifiziert sind, nicht zur Cloud-Datenbasis 34 übertragen werden.

Mittels des Filters 28 kann optional vor oder nach der Generierung solcher Datensätze 44 eine Filterung erfolgen. Der Filter 28 wird insbesondere mittels des zum Konfigurieren des Gateways 24 bestimmten Cloud-Diensts 32 parametriert. Dafür werden die Daten optional einem Bediener über ein Cloud-Portal des Cloud-Diensts 32 angezeigt, so dass der Bediener nochmals Filter und Regeln zur manuellen Einschränkung der Datenmenge definieren kann, zum Beispiel derart, dass nur die Inhalte numerischer Variablen vom Gateway 24 an die Cloud-Datenbasis 34 geschickt werden sollen, da nur sie als Zeitreihe in der Cloud 20 gespeichert werden können, und beschreibende Strings weggefiltert werden. Eine weitere Möglichkeit zur Filterung besteht darin, dass mittels des Filters 28 zum Beispiel Datensätze 44 oder OPC UA Publisher/Subscriber Messages mit einem Wert 40 außerhalb eines dem Filter 28 im Rahmen der Parametrierung vorgegebenen Wertebereichs verworfen werden. Weitere Filtermöglichkeiten können sich auf einen oder mehrere Publisher 12, einen Variablentyp oder dergleichen beziehen.

Eine nochmals weitere, zusätzliche oder alternative Filtermöglichkeit ist grundsätzlich bereits in Form der sogenannten "Western Electric Rules" bekannt. Diese werden zum Beispiel verwendet, wenn es darum geht, ein Norm- oder Anomalieverhalten eines Prozesses anhand seiner Daten zu bestimmen oder Abweichungen zu erkennen. Auch solche Regeln können im Rahmen des Filters 28 und/oder im Rahmen einer Kombination einer Mehrzahl von Datensätzen 44 durch den Datenstromgenerator 30 (zum Erhalt eines Datenstroms für ein sogenanntes Stream Processing) angewandt werden.

Die Interpretation der Daten auf dem Gateway 24 mittels des Interpreters 26 und optional die zusätzliche Filterung der Daten auf dem Gateway 24 mittels des Filters 28 erlaubt auch eine komfortable Anzeige (Browsing) der Daten mittels des Cloud-Portals des Cloud-Diensts 32. Die Vorverarbeitung der Daten mittels des Interpreters 26 stellt diese in einer grundsätzlich mittels des Cloud-Portals darstellbaren Form zur Verfügung. Eventuelle Filterregeln reduzierend die Menge der darstellbaren Daten. Auch auf Seiten des Cloud-Portals kann durch den Bediener eine weitere Einschränkung der zur Anzeige kommenden Daten ausgewählt werden. Die verbleibenden Daten werden mittels des Cloud-Portals in grundsätzlich an sich bekannter Art und Weise dargestellt und der Bediener kann durch die dargestellten Daten scrollen und ggf. auch ergänzende, zum Beispiel zuvor weggefilterte Daten zur Anzeige bringen.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden ein Verfahren zur Übermittlung von Daten in einem die Cloud 20 umfassenden Computernetzwerk 10 zwischen einem oder mehreren in einem Publish-Subscribe-Verfahren als Publisher 12 fungierenden Geräten und einer Datenbasis 34 in der Cloud 20, eine nach dem Verfahren arbeitende Vorrichtung sowie ein Computerprogramm mit einer Implementation des Verfahrens. Das Verfahren basiert auf einem datentechnisch zwischen dem Publisher 12 oder mehreren Publishern 12 und der Cloud 20 befindlichen Gateway 24. Das Gateway 24 umfasst einen Subscriber 14, kann mittels des Subscribers 14 von einem Publisher 12 nach dem Publish-Subscribe-Verfahren versandte Daten empfangen und empfängt beim Betrieb solche Daten. Des Weiteren umfasst das Gateway 24 zum Reduzieren und/oder Aggregieren der empfangenen Daten einen Interpreter 26. Dieser nimmt die Reduktion und/oder Aggregation der empfangenen Daten automatisch gemäß zumindest einer vorgegebenen oder vorgebbaren Regel vor. Die nach der Verarbeitung durch den Interpreter 26 resultierenden und optional durch das Gateway 24 noch weiter verarbeiteten, zum Beispiel gefilterten Daten werden schließlich mittels des Gateways 24 an die Datenbasis 34 in der Cloud 20 übermittelt oder mittels des Gateways 24 für eine Übernahme in die Datenbasis 34 zur Verfügung gestellt.

## Patentansprüche

1. Verfahren zur Übermittlung von Daten in einem die Cloud (20) umfassenden Computernetzwerk (10) zwischen einem oder mehreren in einem Publish-Subscribe-Verfahren als Publisher (12) fungierenden Geräten und einer Datenbasis (34) in der Cloud (20),
mit einem datentechnisch zwischen dem Publisher (12) oder mehreren Publishern (12) und der Cloud (20) befindlichen Gateway (24),
wobei das Gateway (24) einen Subscriber (14) umfasst, welcher von einem Publisher (12) nach dem Publish-Subscribe-Verfahren versandte Daten empfängt,
wobei das Gateway (24) einen Interpreter (26) umfasst, welcher die vom Subscriber (14) empfangenen Daten automatisch aggregiert und/oder reduziert und
wobei das Gateway (24) die nach der Verarbeitung mittels des Interpreters (26) resultierenden Daten an die Datenbasis (34) in der Cloud (20) übermittelt oder für eine Übernahme in die Datenbasis (34) zur Verfügung stellt.

2. Verfahren nach Anspruch 1,
wobei das Gateway (24) einen mittels eines Cloud-Diensts (32) parametrierbaren Filter (28) zum Filtern der nach der Verarbeitung mittels des Interpreters (26) resultierenden Daten umfasst.

3. Verfahren nach Anspruch 1 oder 2,
wobei das Gateway (24) einen Datenstromgenerator (30) zum Erzeugen eines Datenstroms aus den nach der Verarbeitung mittels des Interpreters (26) und ggf. des Filters (28) resultierenden Daten umfasst.

4. Verfahren nach einem der vorangehenden Ansprüche, wobei der Interpreter (26) die vom Subscriber (14) empfangenen Daten automatisch nach vorgegebenen oder vorgebbaren Regeln aggregiert und/oder reduziert.

5. Computerprogramm (24) mit Programmcodemitteln, um alle Schritte von jedem vorangehenden Anspruch durchzuführen, wenn das Computerprogramm (24) im Rahmen einer Übermittlung von Daten in einem die Cloud (20) umfassenden Computernetzwerk (10) sowie zwischen einem oder mehreren in einem Publish-Subscribe-Verfahren als Publisher (12) fungierenden Geräten und einer Datenbasis (34) in der Cloud (20) ausgeführt wird.
